# EUROPEAN PATENT APPLICATION

(11) **EP 3 594 908 A1**
(43) Date of publication of application: **15.01.2020**
(21) Application number: 19185224.3
(22) Date of filing: 09.07.2019
(51) Int. Cl.: G06T 19/00

(54) **SYSTEM AND METHOD FOR VIRTUAL IMAGE ALIGNMENT**

(30) Priority: 09.07.2018 GB 201811249
(71) Applicant: Shortbite Limited, Manchester, Greater Manchester M15 6JJ (GB)
(72) Inventor: FERGIE, Martin Paul, Manchester, Greater Manchester M15 6JJ (GB); LEWIS, James, Manchester, Greater Manchester M15 6JJ (GB)
(74) Representative: Dentons UK and Middle East LLP

(57) **Abstract**

A method of automatically generating an augmented reality view of an interior space using a mobile device comprising a display screen and a video camera, and located within the interior space. The method comprises obtaining data identifying an alignment point of a virtual model of the interior space. Displaying a video image from the camera on the display screen. Outputting a request to a user to point the camera at an alignment feature of the interior space corresponding to the alignment point. In response to receiving a user input indicating that the camera is pointing at the alignment feature, capturing an image from the camera. Analysing the captured image to identify the alignment feature in the captured image corresponding to the alignment point. Analysing the identified alignment feature to compute a transformation required to align the alignment point of the virtual model of the interior space with the alignment feature in the captured image corresponding to the alignment point. Using the computed transformation, the virtual model of the interior space, and a video image from the camera to provide an enhanced reality video image of the interior space on the display screen.

## Description

The present application relates to a system and method for virtual image alignment, in particular for aligning a virtual view of a room with the real room in an augmented reality arrangement.

### Background

When offering home improvement products or services, such as fixtures, fittings or furniture, or decoration such as wallpaper or painting, it is known to assist the potential customer to visualize the appearance or effect of a product or service by producing a virtual model of the possible appearance of an existing real room as it will appear with the product or service in or applied to the real room. Such an image may for example show a new item of furniture in the room, or show the room with a bath or shower cubicle replaced with a different model and/or moved, or show the room with a new paint or wallpaper on some of the walls. Such virtual models may assist users to visualize the appearance of possible changes to the real room, decide whether the possible changes are desirable and select which changes should be carried out.

It has been proposed to use an augmented reality arrangement to display the virtual model. In such an augmented reality arrangement the virtual model of the real room is displayed to a user located within the real room itself, with changed parts of the virtual model being shown overlaying parts of the view of the real room. This may, for example, be carried out using a mobile device, such as a smartphone, to display a video image of a part of the real room being viewed by a camera of the smartphone, with parts of the video image of the real room being overlaid with corresponding parts of the virtual model.

A problem with providing such an augmented reality arrangement is ensuring that the positions of the displayed parts of the virtual model are correctly aligned to the positions of the corresponding displayed parts of the real room. If the positions of the displayed parts of the virtual model are not properly aligned with the corresponding parts of the real room users will generally not be assisted in visualizing the appearance of the proposed changes, and may find the appearance of the augmented reality display unhelpful and unconvincing, and reject it.

In the special case where a mobile device is used to scan the real room to capture data regarding the dimensions and appearance of the real room and this data is then used to generate the virtual model of the real room, and the same mobile device is subsequently used to view the augmented reality arrangement, it may be possible for the mobile device to store visual identifiers of the room during the scanning process, and to detect corresponding visual identifiers of the room during the augmented reality display, and use these visual identifiers to correctly align the displayed virtual model to the real room. However, this approach cannot be used if the mobile device used to view the augmented reality display was not used to carry out the initial scan of the real room. Often this will not be the case, because many mobile devices which can be used to view an augmented reality arrangement are not capable of carrying out such a room scan. In many examples the virtual room model will be based on measurements of the real room gathered manually, or using a dedicated measuring device.

One way of aligning a virtual model of a real room with a video image of the real room in an augmented reality arrangement is for the user to manually align the virtual model to the real room. However, technically inexperienced users may have difficulty in doing this, and the need for manual alignment can make using the augmented reality arrangement unacceptably burdensome for users.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a first aspect, the present disclosure provides a mobile device for automatically generating an augmented reality view of an interior space, the mobile device comprising: a display screen; a video camera; and at least one processor; wherein, when the mobile device is located within an interior space, the processor is arranged to: obtain data identifying an alignment point of a virtual model of the interior space; display a video image from the camera on the display screen; output a request to a user to point the camera at an alignment feature of the interior space corresponding to the alignment point; and in response to receiving a user input indicating that the camera is pointing at the alignment feature, capture an image from the camera; analyse the captured image to identify the alignment feature in the captured image corresponding to the alignment point; and analyse the identified alignment feature to compute a transformation required to align the alignment point of the virtual model of the interior space with the alignment feature in the captured image corresponding to the alignment point; and use the computed transformation, the virtual model of the interior space, and a video image from the camera to provide an enhanced reality video image of the interior space on the display screen.

In a second aspect, the present disclosure provides a computer implemented method for automatically generating an augmented reality view of an interior space using a mobile device comprising a display screen and a video camera, and located within the interior space, the method comprising: obtaining data identifying an alignment point of a virtual model of the interior space; displaying a video image from the camera on the display screen; outputting a request to a user to point the camera at an alignment feature of the interior space corresponding to the alignment point; and in response to receiving a user input indicating that the camera is pointing at the alignment feature, capturing an image from the camera; analysing the captured image to identify the alignment feature in the captured image corresponding to the alignment point; and analysing the identified alignment feature to compute a transformation required to align the alignment point of the virtual model of the interior space with the alignment feature in the captured image corresponding to the alignment point; and using the computed transformation, the virtual model of the interior space, and a video image from the camera to provide an enhanced reality video image of the interior space on the display screen.

In a third aspect, the present disclosure provides a computer program comprising computer readable instructions which, when executed by a processor of a computer cause the computer to carry out the method of the second aspect.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

### Brief Description of the Drawings

Embodiments of the invention will be described, by way of example, with reference to the following drawings, in which:
Figure 1 is an explanatory diagram of a system and method for providing an augmented reality display of a room according to a first embodiment;
Figure 2 is an explanatory diagram of a mobile device useable in the system and method of claim 1;
Figure 3 is flow chart of a method of providing an augmented reality display of a room carried out by the system of the first embodiment;
Figure 4 is an explanatory diagram of a graphical user interface which may be provided on the mobile device of figure 2;
Figure 5 is a flow chart of a method of providing an augmented reality display of a room carried out by the system of the first embodiment;
Figure 6 is an explanatory diagram of a system and method for providing an augmented reality display of a room according to a second embodiment.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

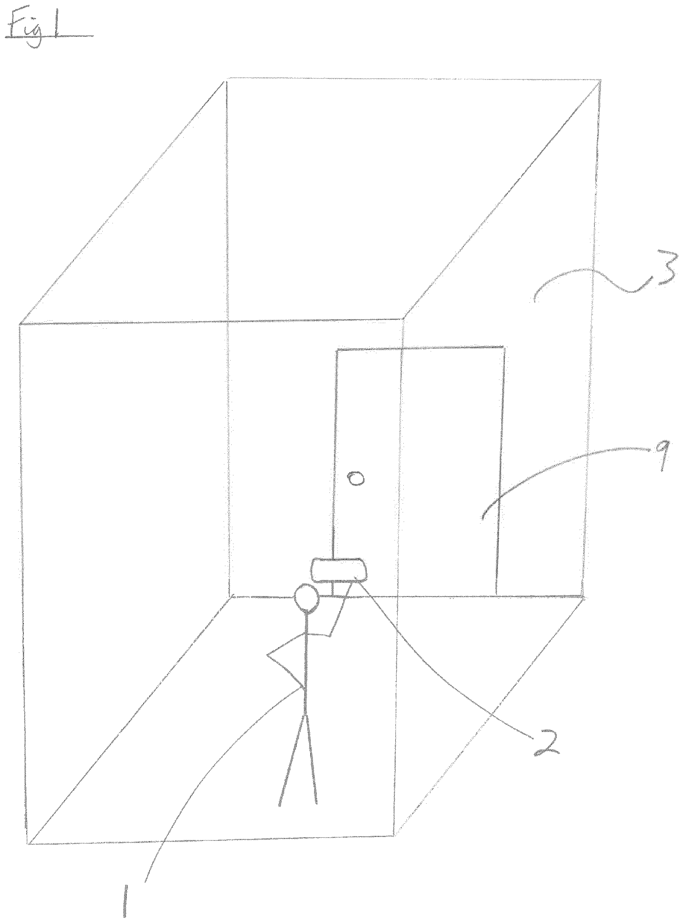

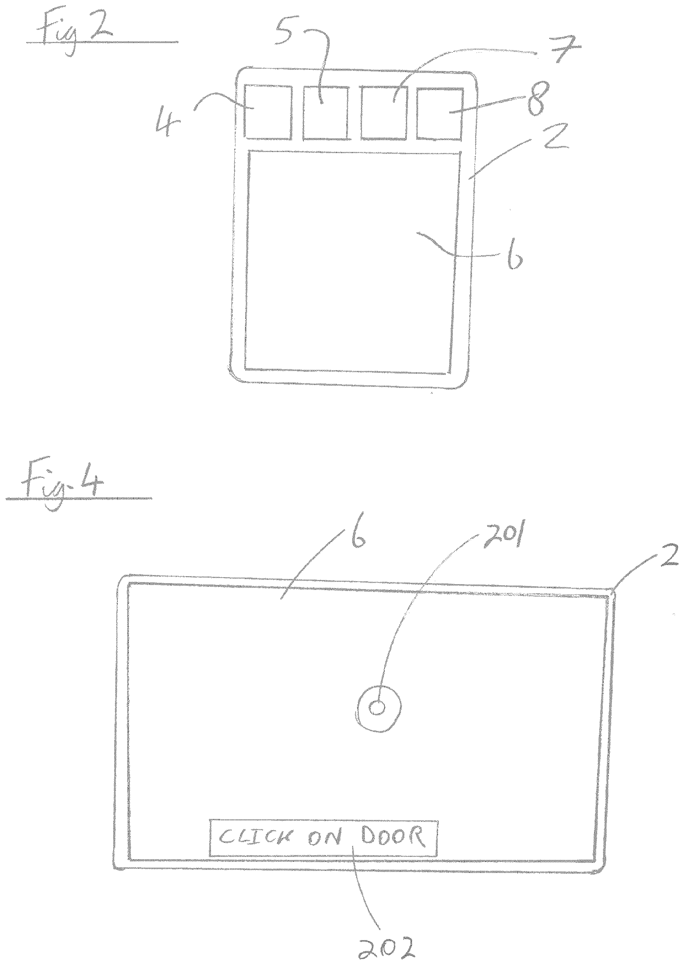

Figure 1 shows a diagrammatic illustration of a system and method for providing an augmented reality display of a room, or other interior space, to a user. Figure 2 shows a diagrammatic illustration of a smartphone useable in the system and method of figure 1.

In figure 1, a user 1 with a smartphone 2 is located inside a room 3 which they are considering making changes to. In one example the room 3 may be a bathroom and the user may be considering moving and/or replacing fixtures and fittings in the bathroom, and/or making changes to the decor.

As shown in figure 2 the smartphone 2 comprises a processor 4, a memory device 5, a display screen 6, a forward facing video camera 7, and an inertial motion sensor unit 8. The forward facing video camera 7 has a field of view extending from a face of the video camera 7 opposite the face on which the display screen 6 is located. The smartphone 2 also comprises communications functionality, which is not shown in figure 2 to improve clarity. Such smartphone communications functionality is well known to the skilled person, and does not need to be described in detail herein.

The smartphone 2 comprises an odometry module for tracking the position and orientation of the smartphone 2 based upon movement data from the inertial motion sensor unit 8 and image data from the video camera 7. This type of tracking is known as visual-inertial odometry. The odometry module may comprise odometry software which is stored in the memory device 5 and executed by the processor 4.

The smartphone 2 also comprises stored data describing a virtual model of the room 3. The virtual model of the room 3 has dimensions and an appearance based on those of the real room 3, but with one or more possible changes made to the room 3. These possible changes may for example, the replacement, removal and/or moving of fixtures and/or fittings, and/or changes to the decor. This data may be stored in the memory device 5.

In operation, the smartphone 2 can provide the user 1 with an augmented reality view of the room 3 as it would appear if the possible changes were made. In this augmented reality view the smartphone 2 displays on the display screen 6 a live video image of the real room 3 taken from the forward facing video camera 7, the displayed video image being overlaid with virtual image elements derived from the virtual model of the room 3 in positions where the changes would change the appearance of the room 3, so that the displayed video image shows the user the expected appearance of the room 3 if the changes were made. The general concept of providing augmented reality displays on a smartphone is well known to the skilled person, and so does not need to be described in detail herein.

In order to provide a convincing and useful augmented reality view of the room 3 the virtual image elements derived from the virtual model of the room 3 must be correctly aligned to the live video image of the room 3 so that the overlaid image elements can be overlaid on the live video image with the correct size and at the correct locations. In practice, it has not been possible to reliably carry out such correct alignment automatically and prevent misalignment of the virtual image elements and the live video image. In general, the absolute location and orientation of the smartphone 2 and the real world room 3 shown in the live video image cannot be determined with sufficient accuracy to avoid such misalignment, particularly because it is usually not possible to accurately determine the absolute location and orientation of a smartphone when it is indoors.

In the illustrated embodiment the data describing the virtual model of the room 3 includes data identifying a door 9 of the room 3 which is to be used as an alignment point or alignment feature, as will be described in detail below. It will be understood that an accurate virtual model of the room 3 will already include the door or doors of the room 3 and that the data identifying a door 9 of the virtual model of the room 3 to be used as an alignment feature may merely be an annotation, identifier, or designation, of some sort. If the room 3 has more than one door, further explanatory data suitable for explaining to the user which of the doors is the door 9 to be used as an alignment feature is stored as a part of, or in association with, the data describing the virtual model of the room 3.

When the user 1 wishes to view the augmented reality view of the room 3 the user stands in the room 3 and activates an augmented reality view function of the smartphone 2. The augmented reality view function of the smartphone 2 may conveniently be provided as an App, or similar software package, stored in the memory device 5 of the smartphone 2. The smartphone 2 then carries out alignment of the virtual image, or virtual image elements, derived from the virtual model of the room 3 with the real room 3 as shown in the video feed from the video camera 7 of the smartphone 2.

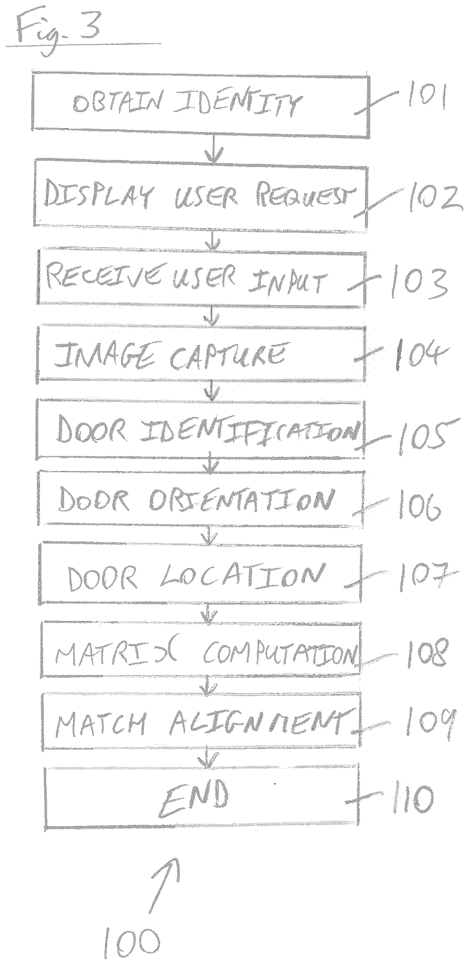

In order to align the virtual image, or virtual image elements, derived from the virtual model of the room 3 with the real room 3 as shown in the video feed from the camera 7, the smartphone 2 carries out a method 100 as illustrated in the flow diagram of figure 3 under the control of the processor 4.

The method 100 begins by the smartphone 2 obtaining the identity of the alignment feature from the stored data describing the virtual model of the room 3, or from data stored together with the stored data, in a first obtain identity step 101.

Next, the smartphone 2 displays the video feed from the camera 7 on the display screen 6 together with a request for the user to point the camera 7 of the smartphone 2 at the alignment feature, in the illustrated example the door of the room 3, and click on the screen, in a display request step 102.

Figure 4 shows an example of a graphical user interface (GUI) user input request screen 200 presented to a user 1 during the display request step 102. As shown in figure 4, the GUI screen 200 is rendered on the display screen 6 of the smartphone 2 during the display request step 102 and comprises an input area or button 201 and user readable instructions 202 to "click on door". It will be understood that the use of concentric circles as a graphic to indicate the user input area and the specific instruction text are examples only and that different graphics and text may be used. In particular, in examples where the room 3 has more than one door the instruction text may indicate which of the doors is to be clicked on.

In response to the user input request screen 200 the user 1 points the smartphone 2, or more precisely the video camera 7 of the smartphone 2, in the direction of the alignment feature of the door 9 of the room 3 so that an image of the door 9 is visible on the display screen 6, and then press or click on the button 201 displayed on the display screen 6 to provide a user input in response to the user input request screen 200.

The smartphone 2 then receives the user input through the button 201 displayed on the display screen 6 in a receive user input step 103.

Then, in response to receiving the user input, the smartphone 2 captures the current image frame of the video signal from the video camera 7 which is being displayed on the display screen 6 of the smartphone 2 when the user input of a press on the button 201 is received in an image capture step 104.

Then, the smartphone 2 analyses the captured image frame to identify the position of the image of the alignment feature, in the illustrated example the door 9, and measure the size and shape of the image of the alignment feature, door 9, in a feature identification step 105. There are a number of known techniques to identify a rectangular object in an image, and any of these known techniques may be used. Some possible techniques which may be used are discussed in detail below.

Then, when the alignment feature, door 9, has been identified in the captured image, the smartphone 2 calculates the orientation of the alignment feature, door 9, relative to the smartphone 2 in a feature orientation step 106. The rectangular shape of the door 9 is specified in the stored data describing the virtual model of the room 3. Accordingly, it is a straightforward geometric exercise to determine the orientation of the door 9 relative to the camera 7 of the smartphone 2 from the apparent shape of the image of the door 9 identified in the captured image. The skilled person will be aware of a number of standard ways to make this calculation.

Then, the smartphone 2 calculates the location of the alignment feature, door 9, relative to the smartphone 2, that is, the distance between the smartphone 2 and the door 9, in a feature location step 107. The size of the door 9, that is, the height and width dimensions of the door 9, is specified in the stored data describing the virtual model of the room 3. Accordingly, it is a straightforward geometric exercise to determine the location of the door 9 relative to the camera 7 of the smartphone 2 from the apparent size of the image of the door 9 identified in the captured image and the previously determined orientation of the door 9 relative to the smartphone 2. The skilled person will be aware of a number of standard ways to make this calculation.

Then, the smartphone 2 uses the determined orientation and distance of the alignment feature, door 9, relative to the smartphone 2 to compute a transformation matrix to map from the location and orientation of the smartphone 2 to the location and orientation of the alignment feature, door 9, as shown in the captured image in a matrix computation step 108. The skilled person will be aware of a number of standard ways to carry out this computation.

Then, the smartphone 2 uses the computed transformation matrix to align the virtual model of the room 3 with the real room 3 in a match alignment step 109. As an illustrative example, applying the computed transformation matrix to the location of the door 9 of the virtual model will place the door 9 of the virtual model at the same position as the door 9 of the real room 3 as observed by the camera 6 of the smartphone 2. Similarly, applying the computed transformation matrix to the location of other parts of the virtual model will place each part at the same position as the corresponding part of the real room 3 as observed by the camera 7 of the smartphone 2.

The method 100 then ends at an end step 110.

In the example of the method 100 described above the alignment point is a rectangular door. The use of a rectangular door as the alignment point is generally convenient because in almost cases the real room 3 will have a door in order to allow the user to access the room. However, the use of a door is not essential. In some cases a door way or door frame surrounding the door may be used as the alignment point instead of the door itself. This may be preferred, for example, where the frame is more visibly distinct than the door. In other examples there may be a doorway, or similar opening, but no actual door located in the doorway, or the door may be open, so that the door itself is not visible, and in such examples the door opening or door frame may be used as the alignment point, rather than the door itself.

In other examples a visible room feature other than a door may be used as the alignment point, for example a window. In principle any visible room feature may be used as the alignment point. This may be preferred in examples where the shape or floorplan of the room is such that the door is not visible, or is only partially visible, from some locations in the room, or examples where there is no door, for example where access to the room is by stairs through an opening in the floor or ceiling.

In practice, most doors and windows are rectangular, and rectangular shapes are simple to identify in an image, and to analyse in order to calculate distance and orientation. However, the use of a rectangular door, window, or other feature as the alignment point is not essential. Visible features having other shapes may be used as the alignment point. In examples where visible features having other shapes are used suitable techniques may be selected to carry out the identification and orientation calculation of the alignment feature.

As is explained above, the method 100 computes a transformation matrix which aligns the virtual model of the room 3 with the real room 3 as observed by the camera 7 of the smartphone 2. Accordingly, the smartphone 2 is able to use the computed transformation matrix to combine the virtual model of the room 3, or virtual image elements derived from the virtual model of the room 3, with the video image from the video camera 7 to generate an augmented reality view of the room 3 for display to the user. This enables the virtual image elements derived from the virtual model of the room 3 to be overlaid on the live video image from the video camera 7 with the correct size and at the correct locations when the augmented reality view of the room 3 is displayed to the user 1 on the screen 6 of the smartphone 2.

Once the virtual model of the room 3 has been correctly initially aligned to the real room 3, subsequent movement of the smartphone 2 relative to the room 3 can be tracked by the odometry software of the smartphone 2 based on movement data from the inertial motion sensor unit 8 and image data from the video camera 7. This tracked movement can be used to maintain correct alignment between the virtual model of the room 3 and the real room 3 as the user 1 and the smartphone 2 move their position and orientation within the real room 3, enabling the user 1 to view the augmented reality view of the room 3 as desired. Methods of tracking movement and maintaining alignment between virtual and real displayed image elements are well known to the skilled person in the field of augmented reality displays, and so do not need to be described in detail herein.

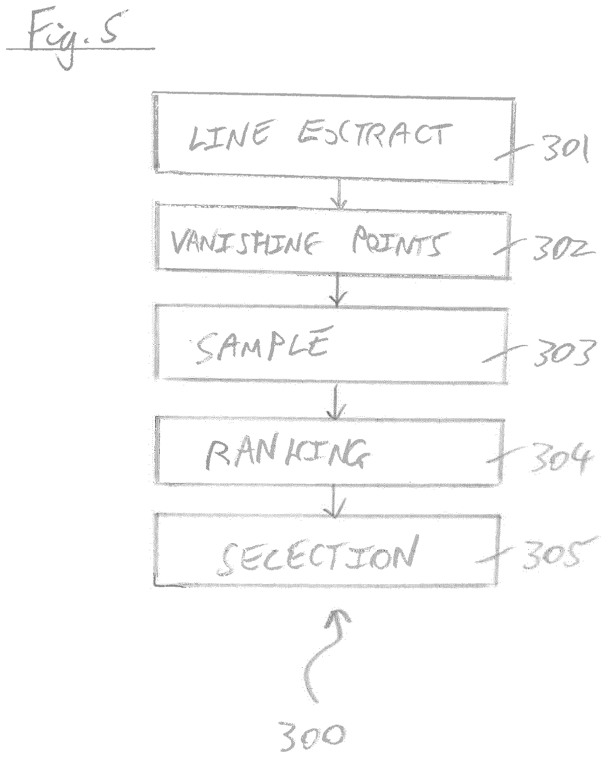

Figure 5 illustrates a flow diagram of a method 300 of carrying out feature identification in the feature identification step 105.

The method 300 begins by the smartphone 2 analyzing the captured image frame to identify and extract line segments from the captured image in a first line extraction step 301. There are a number of known techniques for extracting line segments from images, and any of these can be used.

Then, the smartphone 2 uses the extracted line segments and associated image data to compute a pair of vanishing points for the plane in which the door lies in a compute vanishing points step 302. The plane in which the door lies is the plane of the wall in which the door is located. There are a number of known techniques for computing vanishing points, and any of these can be used.

Then, the smartphone samples a set of hypotheses for the door position in the captured image by sampling sets of pairs of lines that terminate at the computed pair of vanishing points in a sample hypotheses step 303. There are a number of known techniques for doing this, and any of these can be used

Then, the smartphone ranks the different hypotheses using an image-based metric based on the captured image in a ranking step 304. Suitable image based metrics can be determined by a skilled person in the field of image analysis.

Then, the smartphone selects the highest ranked hypothesis in a selection step 305. This selected hypothesis for the door position is then used as the position of the image of the door 9 in subsequent steps of the method 100.

In other examples alternative methods may be used to carry out feature identification. In some examples landmark regression may be used to identify the corners of the door 3. In landmark regression a computer vision model is used to localise specific points of the identifying feature in the captured image. Techniques for performing this are known to persons skilled in the art, and include but are not limited to methods based on machine learning regression models for keypoint localisation from image data.

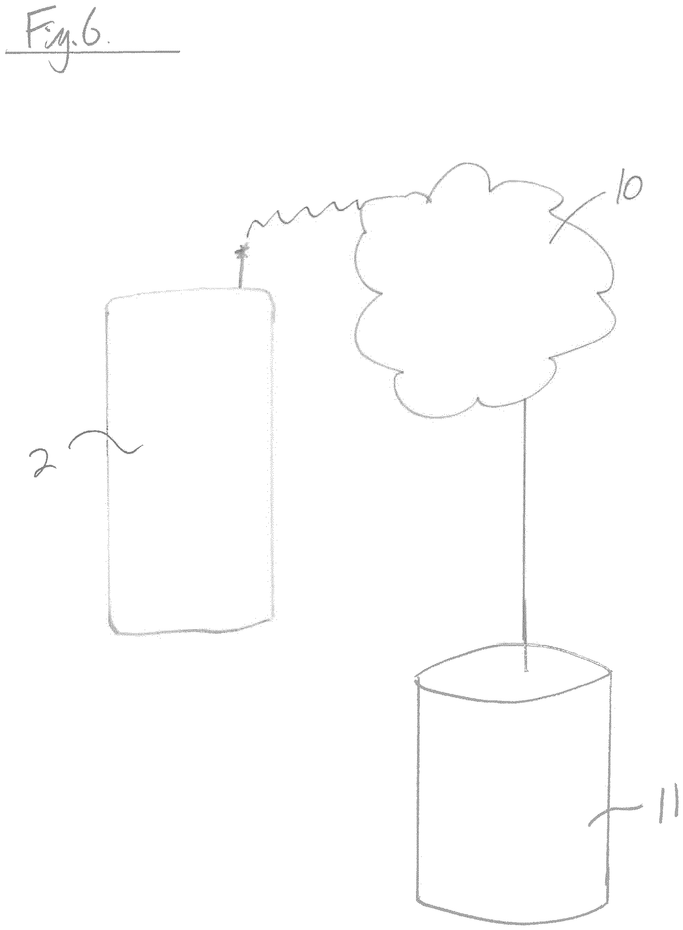

Figure 6 shows a diagrammatic illustration of a system and method for providing an augmented reality display of a room, or other interior space, to a user, according to a second embodiment.

In Figure 6, the smartphone 2 is connected to a communications network 10, and is arranged to receive one or more virtual models of rooms from a room modeling system 11 through the communications network 10. When a user wishes to view an augmented reality display of a room, such as the room 3, the user can stand in the room 3 and activate an augmented reality display mode of the smartphone 2.

Only one smartphone 2 is shown in figure 6, for clarity. It will be understood that in practice there may be a very large number of smartphones 2, or other mobile devices, connected to the network 10. In the illustrated embodiment the communications network 10 is the Internet.

The network 10 is shown schematically in figure 1. It will be understood that the network 10 may in practice comprise a very large number of components, but these are not described or shown to improve clarity and to avoid obscuring the scope of the present invention. In practice, the network 10 may also be connected to other networks. To improve clarity, such other networks are not shown in figure 6.

According to the present invention the room modeling system 11 is arranged to generate virtual models of rooms. These virtual models will generally be three-dimensional (3D) models.

In one possible application the modeling system 11 is operated by an operator such as a company providing furniture, or decorating or interior design services, and the spaces of interest are rooms which customers are interested in furnishing or decorating, such as a bathroom. In this application the modeling system 11 is used to process data regarding room interiors, such as measurements and floorplans provided by customers, and possible changes being considered by the customers, to generate corresponding 3D virtual models of the rooms. These virtual models may then be sent to the user smartphones 2 and used to provide augmented reality views of the appearance of the rooms if proposed changes are made to the rooms, as discussed above.

In the illustrated embodiment the modeling system 1 may be comprised in a server 8 connected to the network 5 and hosting a website 9 offering the products or services of the operator company.

In the illustrated examples the user points the smartphone 2 in the direction of the alignment feature of the door 9 of the room 3 so that an image of the door 9 is visible on the display screen 6, and then presses the button 201 displayed on the display screen 6 to provide a user input. In alternative examples the user may be requested to press on the display screen at the location of the image of the door 9, and the position in the displayed image of where the user press takes place may be used to guide the search for the door 9 in the image to assist in the feature identification step.

In the illustrated examples a method of generating an augmented reality display of a single room, or other interior space, is described. In other examples there may be a plurality of rooms, or other interior spaces. In such examples the smartphone may comprise stored data describing a plurality of virtual models of the room with different possible changes, or of different rooms. In such examples the user may be asked to identify which room and/or possible changes are to be the subject of the augmented reality display.

In the illustrated examples a smartphone is used. In other examples a different device may be used, such as a laptop computer or a tablet computer. In general any mobile device having a camera, a display screen and suitable odometry and computing capabilities may be used.

In the illustrated example the smartphone has a touchscreen and user inputs to the smartphone can be made by touching the touchscreen. In other examples user inputs may be made in some other manner, for example by pressing a physical button or switch on the smartphone. In some examples the smartphone may not have a touch sensitive screen.

In the illustrated example the smartphone provides an augmented reality display of a room, or other interior space, to a user by combining a virtual model of the room with a live video image generated by a camera of the smartphone. In some examples the smartphone may also be able to provide a virtual reality view of the room, or other interior space, to a user, based on the virtual model of the room only.

In the illustrated examples the calculation of the orientation and location of the alignment feature may take into account camera parameters of the video camera. In some examples these camera parameters may be fixed and their values may be stored. In other examples some or all of these camera parameters may be variable. In such examples the processor of the smartphone may interrogate the video camera to determine current camera parameter values during the calculation of the orientation and location of the alignment feature.

In the illustrated examples the smartphone uses visual-inertial odometry. In other examples other forms of odometry may additionally or alternatively be used.

In the illustrated examples the data describing the virtual model is stored in a memory device of the smartphone. In other examples the data describing the virtual model may be stored elsewhere and remotely accessed by the smartphone. In one example the data describing the virtual model may be stored in the modelling system.

In the illustrated examples a transformation matrix is calculated and used. In other examples different forms of transformation may be calculated and used.

In the illustrated embodiment the communication network is the Internet. In alternative examples other networks may be used in addition to, or instead of, the Internet.

In the example described above the system may comprise a server. The server may comprise a single server or network of servers. In some examples the functionality of the server may be provided by a network of servers distributed across a geographical area, such as a worldwide distributed network of servers, and a user may be connected to an appropriate one of the network of servers based upon a user location. In alternative examples the system may be a stand alone system, or may be incorporated in some other system.

The above description discusses embodiments of the invention with reference to a single user for clarity. It will be understood that in practice the system may be shared by a plurality of users, and possibly by a very large number of remote users simultaneously.

In the illustrated embodiment some functionality is provided by software. In other examples this functionality may be provided wholly or in part in hardware, for example by dedicated electronic circuits.

In the described embodiments of the invention the modelling system may be implemented as any form of a computing and/or electronic device.

Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Computer programs and computer executable instructions may be provided using any computer-readable media that is accessible by computing based device. Computer-readable media may include, for example, computer storage media such as a memory and communications media. Computer storage media, such as a memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media.

Although the modelling system is shown as a single device it will be appreciated that this system may be distributed or located remotely and accessed via a network or other communication link (e.g. using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A mobile device for automatically generating an augmented reality view of an interior space, the mobile device comprising:
a display screen;
a video camera; and
at least one processor;
wherein, when the mobile device is located within an interior space, the processor is arranged to:
obtain data identifying an alignment point of a virtual model of the interior space;
display a video image from the camera on the display screen;
output a request to a user to point the camera at an alignment feature of the interior space corresponding to the alignment point; and
in response to receiving a user input indicating that the camera is pointing at the alignment feature, capture an image from the camera;
analyse the captured image to identify the alignment feature in the captured image corresponding to the alignment point; and
analyse the identified alignment feature to compute a transformation required to align the alignment point of the virtual model of the interior space with the alignment feature in the captured image corresponding to the alignment point; and
use the computed transformation, the virtual model of the interior space, and a video image from the camera to provide an enhanced reality video image of the interior space on the display screen.

2. The mobile device according to claim 1, further comprising a data store containing data of the virtual model of the interior space.

3. The mobile device according to claim 1 or claim 2, further comprising an odometry module arranged to track the position and orientation of the mobile device; and
wherein the processor is arranged to also use the position and orientation of the mobile device provided by the odometry module to provide the enhanced reality video image of the interior space on the display screen; and preferably, wherein the processor is arranged to use the computed transformation to initially align the virtual model of the interior space and the video image from the camera, and to use the position and orientation of the mobile device provided by the odometry module to subsequently maintain alignment between the virtual model of the interior space and the video image from the camera.

4. The mobile device according to claim 3, further comprising an inertial motion sensor;
wherein the odometry module is a visual-inertial odometry module arranged to track the position and orientation of the mobile device based upon movement data from the inertial motion sensor and image data from the video camera.

5. The mobile device according to any preceding claim, wherein the computed transformation is a transformation matrix; and/or
wherein the processor is arranged to analyse the identified alignment feature to compute the transformation by measuring the apparent size and shape of the alignment feature in the image; and/or
wherein the processor is arranged to analyse the identified alignment feature to compute the transformation by calculating the orientation of the alignment feature relative to the camera and calculating the location of the alignment feature relative to the camera.

6. The mobile device according to any preceding claim, wherein the alignment feature is rectangular; and
preferably, wherein the processor is arranged to analyse the captured image to identify the alignment feature in the captured image corresponding to the alignment point by:
identifying and extracting line segments from the captured image;
using the extracted line segments and associated image data to compute a pair of vanishing points for a plane in which the alignment feature lies;
sampling a set of hypotheses for alignment feature position in the captured image by sampling sets of pairs of lines that terminate at the computed pair of vanishing points;
ranking the different hypotheses using an image-based metric based on the captured image; and
selecting the highest ranked hypothesis as the alignment feature position.

7. The mobile device according to any preceding claim, wherein the request to the user identifies the alignment feature; and/or
wherein the alignment feature is one of: a door; a door frame; a window; a window frame; and/or
wherein the interior space is a room; and/or
wherein the mobile device is a smartphone.

8. A computer implemented method for automatically generating an augmented reality view of an interior space using a mobile device comprising a display screen and a video camera, and located within the interior space, the method comprising:
obtaining data identifying an alignment point of a virtual model of the interior space;
displaying a video image from the camera on the display screen;
outputting a request to a user to point the camera at an alignment feature of the interior space corresponding to the alignment point; and
in response to receiving a user input indicating that the camera is pointing at the alignment feature, capturing an image from the camera;
analysing the captured image to identify the alignment feature in the captured image corresponding to the alignment point; and
analysing the identified alignment feature to compute a transformation required to align the alignment point of the virtual model of the interior space with the alignment feature in the captured image corresponding to the alignment point; and
using the computed transformation, the virtual model of the interior space, and a video image from the camera to provide an enhanced reality video image of the interior space on the display screen.

9. The method according to claim 8, wherein the mobile device further comprises a data store containing data of the virtual model of the interior space.

10. The method according to claim 8 or claim 9, the mobile device further comprising an odometry module arranged to track the position and orientation of the mobile device; and
wherein the method also uses the position and orientation of the mobile device provided by the odometry module to provide the enhanced reality video image of the interior space on the display screen; and
preferably, wherein the computed transformation is used to initially align the virtual model of the interior space and the video image from the camera, and the position and orientation of the mobile device provided by the odometry module is used to subsequently maintain alignment between the virtual model of the interior space and the video image from the camera.

11. The method according to claim 10, wherein the mobile device further comprises an inertial motion sensor;
wherein the odometry module is a visual-inertial odometry module arranged to track the position and orientation of the mobile device based upon movement data from the inertial motion sensor and image data from the video camera.

12. The method according to any one of claims 8 to 11, wherein the computed transformation is a transformation matrix; and/or
wherein the identified alignment feature is analysed to compute the transformation by measuring the apparent size and shape of the alignment feature in the image; and/or
wherein the identified alignment feature is anlysed to compute the transformation by calculating the orientation of the alignment feature relative to the camera and calculating the location of the alignment feature relative to the camera.

13. The method according to any one of claims 8 to 12, wherein the alignment feature is rectangular; and
preferably, wherein the captured image is analysed to identify the alignment feature in the captured image corresponding to the alignment point by:
identifying and extracting line segments from the captured image;
using the extracted line segments and associated image data to compute a pair of vanishing points for a plane in which the alignment feature lies;
sampling a set of hypotheses for alignment feature position in the captured image by sampling sets of pairs of lines that terminate at the computed pair of vanishing points;
ranking the different hypotheses using an image-based metric based on the captured image; and
selecting the highest ranked hypothesis as the alignment feature position.

14. The method according to any one of claims 8 to 13, wherein the request to the user identifies the alignment feature; and/or
wherein the alignment feature is one of :a door; a door frame; a window; a window frame; and/or
wherein the interior space is a room: and/or
wherein the mobile device is a smartphone.

15. A computer program comprising computer readable instructions which, when executed by a processor of a computer cause the computer to carry out the method of any one of claims 8 to 154.
